# EUROPÄISCHE PATENTANMELDUNG

(11) **EP 2 505 568 A1**
(43) Veröffentlichungstag der Anmeldung: **03.10.2012**
(21) Anmeldenummer: 11160829.5
(22) Anmeldetag: 01.04.2011
(51) Int. Cl.: C04B 28/02, C04B 28/12, C04B 28/14

(54) **Cellulosederivate als Dispergiermittel**

(71) Anmelder: Sika Technology AG, 6340 Baar (CH)
(72) Erfinder: Schober, Irena, CH-8008 Zürich (CH); Schmidt, Johann, CH-8165 Schöfflisdorf (CH)
(74) Vertreter: Sika Patent Attorneys

(57) **Zusammenfassung**

Die Erfindung betrifft die Verwendung mindestens eines Cellulosederivats als Dispergiermittel für eine hydraulisch abbindende Zusammensetzung, wobei das Cellulosederivat an der C2-Position einen Substitutionsgrad von mehr als 0.25 aufweist. Die Erfindung betrifft auch hydraulisch abbindende Zusammensetzungen, Dispergiermittel, Formkörper und Herstellungsverfahren.

## Beschreibung

Die Erfindung betrifft die Verwendung von Cellulosederivaten als Dispergiermittel für hydraulisch abbindende Zusammensetzungen. Die Erfindung betrifft auch hydraulisch abbindende Zusammensetzungen und Dispergiermittel, Formkörper und Herstellungsverfahren.

### Stand der Technik

Ein wichtiges Zusatzmittel für in der Bauindustrie eingesetzte hydraulisch abbindende Zusammensetzungen, wie Zemente, Gipse und Kalk, sind Dispergiermittel, welche als Verflüssiger oder wasserreduzierende Mittel wirken. Der Einsatz solcher Dispergiermittel ist seit langem bekannt. Solche Verflüssiger, die im Allgemeinen organische Polymere sind, werden dem Anmachwasser zugesetzt oder als Feststoff bereits den hydraulisch abbindenden Zusammensetzungen. Die Konsistenz der Zusammensetzung vor dem Abbinden wird dadurch in vorteilhafter Weise verändert. Insbesondere werden die Fließgrenze und Viskosität verringert, wodurch die Verarbeitbarkeit verbessert wird. Der verflüssigende Effekt hält, je nach Dispergiermittel, relativ lange an, obwohl die Abbindezeit insgesamt nicht oder nur wenig erhöht ist. Durch die Verringerung des Wasseranteils wird die Festigkeit des ausgehärteten Betons verbessert.

Die gängigen Verflüssiger für hydraulische Bindemittel wie Zement oder Gips sind Lignosulfonate, Naphthalinsulfonsäure-Formaldehyd Kondensate, sulfonierte Melamin-Formaldehyd Kondensate sowie Polycarboxylate. Alle diese Verflüssiger ausser den Lignosulfonaten basieren auf Rohstoffen, die aus Erdöl gewonnen werden.

Da Betonverflüssiger in der Bauchemie in großen Mengen eingesetzt werden, sind aus ökologischen und ökonomischen Gründen Verflüssiger auf der Basis nachwachsender Rohstoffe von Bedeutung. Dabei werden vor allem Polysaccharide beispielsweise auf der Basis von Cellulose, Stärke und deren Derivate und Lignosulfate eingesetzt. Bei solchen Verflüssigern ist jedoch nachteilig, dass im Allgemeinen nur eine relativ schwache Verflüssigerwirkung erzielt wird, die mit einer unerwünschten starken Verzögerung des Abbindens einhergeht.

Der Rohstoff Cellulose ist unter anderem als Zellstoff und Baumwolle kostengünstig und in großen Mengen verfügbar. Jedoch zeigt sich gerade bei Derivaten von Cellulose die erwähnte Problematik, dass die verflüssigende Wirkung im Allgemeinen gering ist, während gleichzeitig das Abbinden stark verzögert wird.

Betonverflüssiger auf der Basis derivatisierter Cellulose und Stärke werden in der DE 102 09 812 A1 beschrieben. Dabei wird eine partiell hydrolysierte carboxylgruppenhaltige Cellulose eingesetzt, die gegebenenfalls mit Alkyl- oder Sulfatgruppen ausgestattet ist.

Die US 5,573,589 offenbart verschiedene sulfatierte Polysaccharide als Dispergiermittel für Zementzusammensetzungen. Insgesamt wird eine Vielzahl verschiedener veretherter und sulfatierter Zuckerderivate hergestellt, die hinsichtlich Ausbreitmaß und Aushärtezeit ähnliche Eigenschaften erzielen.

Die US 3,951,674 beschreibt weitere Betonzusatzstoffe auf der Basis von acetylierter und sulfatierter Cellulose.

### Aufgabe der Erfindung

Der Erfindung liegt die Aufgabe zugrunde, die oben beschriebenen Probleme zu überwinden.

Es sollen Dispergiermittel für hydraulisch abbindende Zusammensetzungen auf der Basis nachwachsender Rohstoffe mit vorteilhaften Eigenschaften bereitgestellt werden. Insbesondere sollen Dispergiermittel bereitgestellt werden, die eine gute verflüssigende Wirkung zeigen. Dabei soll das Dispergiermittel den Abbindeprozess insgesamt nicht oder möglichst wenig verzögern. Bevorzugt soll dabei die verflüssigende Wirkung möglichst lange anhalten, um eine gleichmäßige Verarbeitung zu ermöglichen. Gleichzeitig sollen die Materialeigenschaften des ausgehärteten Betons nicht oder möglichst wenig beeinträchtigt werden. Insbesondere soll der Beton eine hohe Festigkeit sowie gute Belastungseigenschaften aufweisen. Das Dispergiermittel soll eine hohe Stabilität aufweisen und in einfacher Weise einsetzbar sein.

### Offenbarung der Erfindung

Überraschenderweise wird die der Erfindung zugrunde liegende Aufgabe gelöst durch Verwendungen, hydraulisch abbindende Zusammensetzungen, Dispergiermittel, Formkörper und Herstellungsverfahren gemäß den Patentansprüchen.

Gegenstand der Erfindung ist die Verwendung mindestens eines Cellulosederivats als Dispergiermittel für eine hydraulisch abbindende Zusammensetzung, wobei das Cellulosederivat an der C2-Position einen Substitutionsgrad von mehr als 0.25 aufweist.

Unter dem Ausdruck "hydraulisch abbindendes Bindemittel" werden vorliegend insbesondere mineralische Bindemittel verstanden, welche in Gegenwart von Wasser aushärten.

In einer bevorzugten Ausführungsform der Erfindung weist das Cellulosederivat an der C2-Position einen Substitutionsgrad von mehr als 0.4 oder mehr als 0.5 auf. Bevorzugt liegt der Substitutionsgrad an der C2-Position zwischen 0.25 und 1, insbesondere zwischen 0.4 und 1 oder zwischen 0.5 und 1.

Cellulose ist ein lineares Kettenmolekül aus Glucoseuntereinheiten. Die Monomere sind durch glycosidische Bindungen über die C1- und C4-Positionen miteinander verknüpft. Daher weist das Polymer an den jeweiligen C2-, C3- und C6-Positionen der Glucoseuntereinheiten freie Hydroxygruppen auf. Der "Substitutionsgrad" (DS) gibt den Anteil der Hydroxygruppen an, die im Mittel mit einem Substituenten versehen sind. Insbesondere ist mit dem Ausdruck "Substitutionsgrad an der C2-Position" der Substitutionsgrad der an den C2-Positionen vorliegenden Hydroxygruppen gemeint. Entsprechendes gilt auch für den Substitutionsgrad der C3- und C6-Positionen. Die Substituenten ersetzen dabei insbesondere die Wasserstoffatome der Hydroxygruppen, welche an den C2-, C3- und/oder C6-Positionen vorliegen. Entsprechend sind die Substituenten insbesondere jeweils über ein Sauerstoffatom mit den C2-, C3- oder C6 Kohlenstoffatomen der Glucoseeinheiten verknüpft. Erfindungsgemäß sind die Substituenten insbesondere Ether- und Estergruppen.

Beispielsweise bedeutet ein Substitutionsgrad von 0.25, dass im Mittel 25% der Hydroxygruppen derivatisiert sind, während 75% freie Hydroxygruppen vorhanden sind. Der Substitutionsgrad bezieht sich auf den mittleren Wert bei einer Cellulosepräparation und nicht auf eine einzelne isolierte Molekülkette.

Methoden zur Bestimmung des Substitutionsgrads sind im Stand der Technik bekannt. Der Substitutionsgrad wird bevorzugt durch 13C-NMR Spektroskopie ermittelt. Bevorzugt wird ein Spektrum mittels hochauflösender Flüssigkeits-NMR-Spektroskopie aufgenommenen. Die Auswertung der NMR Spektren erfolgt bevorzugt gemäß Zhang et al. (Zhang, Peschel, Brendler, Groth, Fischer; Synthesis and Bioactivity of Cellulose Derivatives. Macromol. Symp., 280, 2009, 28-35; oder Zhang, Peschel, Klinger, Gebauer, Groth, Fischer; Synthesis of carboxyl cellulose sullfate with various contents of regioselectively introduced sulfate and carboxyl groups. Carbohydr. Pol. 82, 2010, 92-99). Mit dieser Methode lässt sich auch der Substitutionsgrad an der C3- und C6-Position bestimmen. Außerdem lässt sich das gesamte Substitutionsmuster durch eine einzige Messung ermitteln.

In einer bevorzugten Ausführungsform der Erfindung ist das Cellulosederivat ein Celluloseester und/oder Celluloseether. Bevorzugt ist das Derivat ein solches, bei dem die Hydroxygruppen an der C2- und gegebenenfalls auch an der C3- und/oder C6-Position substituiert sind. Darüber hinaus ist die Cellulose bevorzugt nicht derivatisiert, außer gegebenenfalls an der endständigen C1- und C4-Position.

Bevorzugt ist das Cellulosederivat ein Celluloseester von Schwefelsäure oder einem Schwefelsäurederivat, wie Alkylschwefelsäure. Bevorzugten sind die Substituenten an der C2-Hydroxylgruppe ausgewählt aus Sulfat, Sulfonat, Alkylsulfat, Alkylsulfonat, Hydroxyalkylsulfat und Hydroxyalkylsulfonat. Weitere bevorzugte Substituenten sind Alkyl, Hydroxyalkyl und/oder Acetat. Sofern vorhanden, verfügen Alkylgruppen der Substituenten insbesondere über 1-12 Kohlenstoffatome. Es können auch Gemische dieser Substituenten mit anderen Substituenten oder untereinander vorliegen.

In einer bevorzugten Ausführungsform der Erfindung weist das Cellulosederivat an der C2-Position einen anionischen Rest auf.

Besonders bevorzugt ist der Substituent an der C2-Position ein Sulfatrest. Erfindungsgemäß wurde gefunden, dass die vorteilhaften Eigenschaften in besonderer Weise mittels Sulfatierung erzielt werden.

Das Cellulosederivat ist insbesondere ein Salz, bevorzugt ein Alkali- und/oder Erdalkalimetallsalz, beispielsweise von Cellulosesulfat. Im Besonderen ist das Cellulosederivat ein Natriumsalz, beispielsweise von Cellulosesulfat.

In einer weiteren bevorzugten Ausführungsform ist die Cellulose an der C2-Position alkyliert. Dabei ist die Cellulose an der C2-Position bevorzugt methyliert oder ethyliert.

Die Erfindung beruht auf der überraschenden Erkenntnis, dass Cellulosederivate, die Substituenten an der C2-Position aufweisen, eine besondere Kombination vorteilhafter Eigenschaften als Dispergiermittel zeigen. So wurde erfindungsgemäß gefunden, dass diese Derivate eine sehr gute verflüssigende Wirkung zeigen, ohne das Abbindeverhalten, insbesondere die Abbindedauer, zu beeinträchtigen. Die erfindungsgemäßen Cellulosederivate unterscheiden sich dadurch signifikant von bekannten Cellulosederivaten, die keine starke verflüssigende Wirkung zeigen und die im Allgemeinen die Abbindedauer in unerwünschter Weise deutlich verlängern.

Die Erfinder haben Untersuchungen zu bekannten Cellulosederivaten vorgenommen, die als Betonverflüssiger eingesetzt werden. Dabei wurde festgestellt, dass im Stand der Technik Cellulosederivate eingesetzt werden, die an der C2-Position nicht oder nur unzureichend substituiert sind. Bei üblichen Derivatisierungsverfahren, die im Stand der Technik zur Herstellung von Verflüssigern eingesetzt werden, erfolgt die Derivatisierung im Wesentlichen an der C6- und teilweise an der C2-Position. Solche Substituentenmuster werden häufig bei herkömmlichen Verfahren beobachtet, bei denen Cellulose in einem Batch-Verfahren einfach mit einem Acylierungs- oder Veretherungsreagenz versetzt wird. So wird beispielsweise gemäß US 5,573,589, Beispiel 10, Cellulose in einem Eintopf-Verfahren sulfatiert. Es wurde gefunden, dass bei vergleichbaren Reaktionen Produkte erhalten werden, deren C2-Position nicht oder nur geringfügig substituiert ist.

Zur Herstellung der erfindungsgemäß einsetzbaren Cellulosederivate werden spezielle Syntheseverfahren eingesetzt, bei denen eine ausreichende Derivatisierung an der C2-Position erfolgt. Dafür eignen sich insbesondere Verfahren, bei denen von einer bereits derivatisierten Cellulose ausgegangen wird, beispielsweise von Cellulosetriacetat, oder bei denen die konkurrierenden C6- und C3- Positionen blockiert werden, insbesondere durch die Verwendung von Schutzgruppen. Cellulosederivate, die mindestens an der C2-Position substituiert sind, können nach bekannten Methoden hergestellt werden. Entsprechende Verfahren zur Herstellung der Cellulosederivate sind dem Fachmann an sich bekannt.

Wenn erfindungsgemäß ein Substituent an der C2-Position eingefügt wird, kann an der C2-Position oder an anderen Positionen je nach dem verwendeten Herstellungsverfahren noch ein Anteil von Resten von Substituenten vorhanden sein, die von dem Ausgangsmaterial stammen (bei Cellulosederivaten als Ausgangsmaterialien) oder die als Schutzgruppen eingesetzt wurden. Beispielsweise kann die Cellulose noch Acetat-, Trifluoracetat- oder Silyletherreste aufweisen.

Die eingesetzte Cellulose ist bevorzugt ein natürlicher Rohstoff. Sie kann aus pflanzlichen Quellen, wie Holz, insbesondere aus Laubholz und/oder Nadelholz, Einjahrespflanzen oder Baumwolle, nach bekannten Verfahren erhalten werden. Bevorzugt ist dabei der Einsatz von Zellstoff, bevorzugt Zellstoff wie er für die Papierherstellung erhalten wird. Bevorzugt ist die Cellulose ein Recycling-Produkt. Ein bevorzugter Ausgangsstoff ist mikrokristalline Cellulose. Die Cellulose kann in bekannter Weise aufgereinigt und/oder chemisch modifiziert sein. Weitere Ausgangsstoffe bzw. Zwischenprodukte können Cellulosederivate, wie Cellulosetriacetat oder -2,5-Acetat, sein.

Die erfindungsgemäß verwendeten Cellulosederivate weisen bevorzugt ein mittleres Molekulargewicht Mw von 5'000 bis 1'000'000 g/mol, insbesondere zwischen 10'000 und 500'000 g/mol oder zwischen 20'000 und 300'000 g/mol auf. Die gewünschte mittlere Kettenlänge kann durch selektive Spaltung erreicht werden.

In einer bevorzugten Ausführungsform der Erfindung weist das Cellulosederivat an der C3-Position einen Substitutionsgrad von 0 bis 1, oder von 0 bis 0.5, oder von 0 bis 0.35 auf.

Erfindungsgemäß wurde gefunden, dass die erfindungsgemäße Wirkung insbesondere erreicht wird, wenn die Summe der Substituenten an der C2- und C3-Position relativ hoch ist. Bevorzugt ist die Summe der Substituenten an der C2- und C3-Position größer 0.5, noch mehr bevorzugt größer 0.7, größer 1, größer 1.25 oder größer 1.5.

Insbesondere ist des Weiteren der Substitutionsgrad an der C2-Position grösser als an der C3-Position.

In einer bevorzugten Ausführungsform der Erfindung weist das Cellulosederivat an der C3-Position einen nicht ionischen Rest auf, insbesondere einen Alkyl-, Acetyl- oder Acylrest. Ein Alkylrest verfügt insbesondere über 1 - 12 Kohlenstoffatome. An der C3-Position kann auch ein ionischer Substituent vorliegen, beispielsweise ein Sulfatrest.

Es wurde gefunden, dass die vorteilhaften Eigenschaften der Erfindung erreicht werden, wenn die C6-Position wenig oder auch stark substituiert ist. Daher kann erfindungsgemäß der Substitutionsgrad an der C6-Position zwischen 0 und 1 liegen. Vorteilhafte Eigenschaften werden beispielsweise erzielt, wenn der Substitutionsgrad an der C2-Position relativ hoch ist und auch an C6-Position eine Substitution vorhanden ist. Beispielsweise liegt der Substitutionsgrad an der C2-Position zwischen 0.4 und 1, insbesondere zwischen 0.5 und 1, während der Substitutionsgrad an der C6-Position zwischen 0.2 und 1 liegt. Vorteilhafte Eigenschaften können jedoch insbesondere erzielt werden, wenn der Substitutionsgrad an der C6-Position relativ niedrig ist. Beispielsweise kann der Substitutionsgrad an der C6-Position zwischen 0 und 0.9, oder zwischen 0 und 0.6 oder zwischen 0 und 0.5 liegen. Er kann auch zwischen 0 und 0.3 oder zwischen 0 und 0.2 liegen. Bevorzugt liegt der Substitutionsgrad an der C2-Position zwischen 0.5 und 1, während der Substitutionsgrad an der C6-Position kleiner 0.8, bevorzugt kleiner 0.6 ist.

Bevorzugt ist die Summe der Substitutionsgrade des Cellulosederivats an der C2- und C3-Position >0.5, bevorzugt >0.7, und/oder das Cellulosederivat weist an der C6-Position einen Substitutionsgrad von <0.9, bevorzugt <0.7 auf.

Erfindungsgemäß wurde gefunden, dass ein hoher Substitutionsgrad an der C2-Position mit einer ausgezeichneten verflüssigenden Wirkung einhergeht. Gleichzeitig scheint eine zusätzliche Substitution an der C6-Position die verflüssigende Wirkung relativ wenig zu beeinflussen. Eine gute verflüssigende Wirkung kann auch mit einem hohen C6-Anteil und einem relativ niedrigen C2-Substitutionsgrad erzielt werden. In diesem Fall ist jedoch die Abbindedauer erhöht. Erfindungsgemäß wird eine niedrige Abbindedauer in Verbindung mit einer guten Verflüssigungswirkung erzielt, wenn der Substitutionsgrad an der C2-Position relativ hoch ist.

In einer bevorzugten Ausführungsform ist das Cellulosederivat in wässriger Lösung stabil, insbesondere bei einem pH von >4, >6 oder >7. Besonders bevorzugt ist die Stabilität in basischen hydraulisch abbindenden Zusammensetzungen gegeben. Insbesondere ist es bevorzugt, dass der Substituent an der C2-Position in einer hydraulisch abbindenden Zusammensetzung eine ausreichende Stabilität aufweist, so dass der Substituent während des Zeitraums des Abbindens nicht oder nur zu einem geringen Anteil abgetrennt wird. Bevorzugt wird der Substituent an der C2-Position während des Abbindeprozesses zu nicht mehr als 10%, bevorzugt zu nicht mehr als 5%, abgetrennt.

In einer besonders bevorzugten Ausführungsform ist der Substitutionsgrad an der C2-Position größer 0.4, bevorzugt größer 0.5, insbesondere größer 0.7, wobei der Substituent Sulfat ist. Dabei ist bevorzugt der Substitutionsgrad an C6 mindestens 0.2 oder maximal 0,76 und/oder der Substitutionsgrad an C3 ist kleiner 0,5, bevorzugt kleiner 0.3. Insbesondere sind die C3- und C6-Postionen bei dieser Ausführungsform ebenfalls sulfatiert.

Bevorzugt sind insbesondere die folgenden Substitutionsmuster, bevorzugt mit Sulfatsubstituenten:

| | | |
|---|---|---|
| C2: >0.4 | C2 + C3: > 0.7 | C6: < 0.9 |
| C2: >0.5 | C2 + C3: > 0.8 | C6: < 0.6 |

In einer bevorzugten Ausführungsform ist die Cellulose an der C2-Position mit einem anionischen Substituenten, bevorzugt Sulfat, ausgestattet, während eine Substitution an der C3-Position mit einem Alkylrest vorhanden ist. Der Alkylrest verfügt insbesondere über 1 - 8 Kohlenstoffatome. Die C6-Position kann bei dieser Ausführungsform ebenfalls derivatisiert sein, beispielsweise sulfatiert.

Bei einer weiteren bevorzugten Ausführungsform ist die Cellulose an der C2- und C3-Position sulfatiert, während sie an der C6-Position nicht derivatisiert ist, bzw. wobei der Substitutionsgrad an der C6-Position kleiner als 0.2 ist.

In einer weiteren bevorzugten Ausführungsform ist die Cellulose an der C2- und C3-Position sulfatiert und an der C6-Position acyliert oder acetyliert.

In einer bevorzugten Ausführungsform der Erfindung ist der Substitutionsgrad der Cellulose insgesamt (gesamt-DS), also die Summe der Substitutionsgrade an der C2-, C3- und C6-Position, zwischen 0.25 und 2.5, insbesondere zwischen 0.5 und 2.5 oder zwischen 0.5 und 1.8. Bevorzugt ist der gesamt-DS kleiner als 2.5 oder kleiner als 1.8. Bevorzugt ist der Anteil der Substituenten an der C2-Position an allen Substituenten (C2, C3 und C6) mindestens 15% oder mindestens 20%.

Bevorzugt wird nicht eine Sulfatierung gemäß Beispiel 10 von US 5,573,589 durchgeführt. In diesem Beispiel wird eine einfache Umsetzung von Cellulose mit Piperidin-Schwefelsäure als Sulfatierungsmittel durchgeführt. Obwohl dieses konkrete Piperidin-Derivat nicht erhältlich war und das Beispiel nicht unmittelbar nachgearbeitet werden konnte, führte die Umsetzung mit mehreren vergleichbaren SO3-Komplexen jeweils nicht zu einer signifikanten Substitution an der C2-Position.

In einer Ausführungsform der Erfindung weist das Cellulosederivat keine Carboxylgruppen auf.

In einer bevorzugten Ausführungsform der Erfindung ist das Cellulosederivat ein solches, das substituierte Hydroxygruppen aufweist und darüber hinaus nicht oder nur unwesentlich derivatisiert bzw. chemisch verändert ist. Die Derivatisierung erschöpft sich damit im Wesentlichen in der Substitution der drei freien Hydroxygruppen der Cellulose.

In einer bevorzugten Ausführungsform der Erfindung enthält die hydraulisch abbindende Zusammensetzung ein hydraulisch abbindendes Bindemittel, ausgewählt aus der Gruppe bestehend aus Zement, Gips, gebranntem Kalk, Puzzolan, Schlacke, Hüttensand, Silicastaub, Trass und Flugasche. Dabei können auch Mischungen der genannten Bindemittel vorliegen. Besonders bevorzugt ist das hydraulisch abbindende Bindemittel Zement.

Erfindungsgemäß werden die Cellulosederivate als Dispergiermittel für hydraulisch abbindende Zusammensetzungen verwendet. Dabei bedeutet der Begriff "Dispergiermittel", dass die Cellulosederivate die Verarbeitbarkeit der hydraulisch abbindenden Zusammensetzungen verbessern. Insbesondere fördern sie die gleichmäßige und vorteilhafte Vermischung der festen Bindemittel mit dem enthaltenen Wasser. In einer bevorzugten Ausführungsform der Erfindung erfolgt die erfindungsgemäße Verwendung des Cellulosederivats als Verflüssiger. Die Verwendung erfolgt insbesondere zur Verbesserung der Konsistenz, zur Erniedrigung der Fließgrenze und der Viskosität und/oder zur Verringerung des Wasseranteils. Im Besonderen erfolgt die Verwendung des Cellulosederivats zur Verbesserung der Fliessfähigkeit einer hydraulisch abbindenden Zusammensetzung.

Ein weiterer Gegenstand der Erfindung ist eine hydraulisch abbindende Zusammensetzung, enthaltend
(a) mindestens ein hydraulisch abbindendes Bindemittel,
(b) mindestens ein Cellulosederivat, das an der C2-Position einen Substitutionsgrad von mehr als 0.25 aufweist, und
(c) gegebenenfalls Wasser.

Unter dem Begriff "hydraulisch abbindende Zusammensetzung" werden Zusammensetzungen verstanden, die hydraulisch abbindende Bindemittel enthalten. Geeignete Zusammensetzungen und Bindemittel sind dem Fachmann im Bereich der Bauchemie bekannt. Als hydraulisch abbindende Zusammensetzung wird Zement bevorzugt. Übliche Zemente sind beispielsweise Portlandzemente oder Tonerdeschmelzzemente und deren jeweilige Mischungen mit üblichen Zusätzen.

Bei der erfindungsgemäßen Verwendung von Cellulosederivaten zeigen die hydraulisch abbindenden Zusammensetzungen eine verbesserte Dispergierbarkeit, insbesondere eine verbesserte Verflüssigung, bei keiner oder einer relativ geringen Verzögerung des Abbindeprozesses.

Das Cellulosederivat wird vorzugsweise in einer Menge von 0.01 bis 5 Gew.%, insbesondere 0.05 bis 2 Gew.% oder 0.1 bis 1 Gew.%, bezogen auf das Gewicht des Bindemittels, eingesetzt. Das Cellulosederivat kann getrennt oder in Form einer cellulosederivathaltigen Zusammensetzung in fester oder flüssiger Form zugegeben werden.

In einer bevorzugten Ausführungsform der Erfindung enthält die hydraulisch abbindende Zusammensetzung zusätzlich Zusatzstoffe und/oder Zusatzmittel (d). Geeignete Zusatzstoffe sind beispielsweise Kalksteinfüller, Quarzfüller, Quarzmehl und/oder Kreiden. Als Zusatzmittel können beispielsweise andere Betonverflüssiger, wie Lignosulfonate, sulfonierte Naphthalin-Formaldehyd Kondensate, sulfonierte Melamin-Formaldehyd-Kondensate, Polycarboxylatether oder andere Polysaccharide oder Derivate davon, Beschleuniger, Korrosionsinhibitoren, Verzögerer, Schwindreduzierer, Entschäumer oder Porenbildner enthalten sein.

Weiterhin können Aggregate, insbesondere Sand, Kies, Steine und/oder Gesteinskörnungen, vorliegen.

Ein weiterer Gegenstand der Erfindung ist ein Formkörper, erhältlich durch Abbinden und Aushärten einer erfindungsgemäßen hydraulisch abbindenden Zusammensetzung. Erfindungsgemäß werden mit dem Begriff "Formkörper" ausgehärtete Körper bezeichnet, die irgendeine dreidimensionale Form aufweisen, wie Bauteile von Gebäuden etc. Die Formkörper müssen dabei nicht freistehend sein. Sie können auch an andere Körper oder Oberflächen anschließen, beispielsweise als Böden, Beschichtungen, Füllungen etc.

Gegenstand der Erfindung ist auch ein Verfahren zur Herstellung einer hydraulisch abbindenden Zusammensetzung, umfassend die Schritte
(A)Bereitstellen mindestens eines hydraulisch abbindenden Bindemittels und mindestens eines Cellulosederivats, das an der C2-Position einen Substitutionsgrad von mehr als 0.25 aufweist,
(B)Vermischen des mindestens einen hydraulisch abbindenden Bindemittels und des mindestens einen Cellulosederivats.

Das Cellulosederivat kann dabei beispielsweise in Wasser, insbesondere im Anmachwasser für das hydraulische Bindemittel, dispergiert oder gelöst werden und anschließend dem hydraulischen Bindemittel zugemischt werden. Damit wird der Vorgang des Abbindens der hydraulisch abbindenden Zusammensetzung direkt eingeleitet.

Grundsätzlich ist es aber auch möglich, das Cellulosederivat in fester Form mit dem hydraulischen Bindemittel vorzumischen. Der Vorgang des hydraulischen Abbindens kann in einem weiteren Schritt (C) durch den Zusatz von Wasser eingeleitet werden. Letzteres kann, falls erwünscht, auch zeitlich verzögert erfolgen.

Gegenstand der Erfindung ist auch ein Dispergiermittel, enthaltend mindestens ein Cellulosederivat, das an der C2-Position einen Substitutionsgrad von mehr als 0,25 aufweist. Das Dispergiermittel enthält bevorzugt Wasser. Es kann beispielsweise als Lösung, Suspension oder Paste, oder als Feststoff vorliegen. Das Dispergiermittel kann weitere übliche Additive enthalten. Diese können beispielsweise andere Verflüssiger, beispielsweise andere Cellulosederivate oder sonstige Polysaccharide, Lignosulfonate, sulfonierte Naphthalin-Formaldehyd-Kondensate, sulfonierte Melamin-Formaldehyd-Kondensate oder weitere Polycarboxylatether (PCE) sein. Weitere Zusätze können Stabilisatoren, Antioxidantien, Farbstoffe, Beschleuniger, Verzögerer, Schwindreduzierer, Entschäumer, Luftporenbildner oder Schaumbildner sein. Typischerweise ist der Anteil des Cellulosederivats zwischen 5 bis 95 Gew.-%, insbesondere 10 bis 90 Gew.-%, bezogen auf das Gesamtgewicht des Dispergiermittels. Bevorzugt ist der pH-Wert eines wässrigen Dispergiermittels >4, >6 oder >7.

Das Cellulosederivat oder Dispergiermittel kann insbesondere verwendet werden als Verflüssiger, als Wasserreduzierer, zur Verbesserung der Verarbeitbarkeit und/oder zur Verbesserung der Fliessfähigkeit der damit hergestellten hydraulisch abbindenden Zusammensetzungen.

Das Cellulosederivat oder Dispergiermittel kann in festem Aggregatszustand eingesetzt werden, insbesondere als, Pulver. Falls dies zweckmässig erscheint, kann das Cellulosederivat jedoch auch in Form von Schuppen, Pellets, Granulaten oder Platten verwendet werden. Insbesondere ist es auch möglich, das Cellulosederivat auf einen Träger aufzubringen. Solche festen Zusätze lassen sich gut transportieren und lagern. Das Cellulosederivat kann im festen Aggregatszustand ein Bestandteil einer so genannten Trockenmischung, beispielsweise einer Zementzusammensetzung, sein, die über längere Zeit lagerfähig ist und typischerweise in Säcken abgepackt oder in Silos gelagert wird und zum Einsatz kommt. Eine solche Trockenmischung ist auch nach längerer Lagerungszeit einsetzbar und weist eine gute Rieselfähigkeit auf.

Das Cellulosederivat oder Dispergiermittel kann einer hydraulisch abbindenden Zusammensetzung mit oder kurz vor oder kurz nach der Zugabe des Wassers zugefügt werden. In einer bevorzugten Ausführungsform erfolgt die Zugabe in Form einer wässrigen Lösung oder Dispersion, insbesondere als Anmachwasser oder als Teil des Anmachwassers. Die Herstellung der wässrigen Lösung erfolgt insbesondere durch Vermengen mit Wasser. Das Cellulosederivat kann einer hydraulisch abbindenden Zusammensetzung jedoch auch vor oder während ihrem Mahlvorgang, beispielsweise dem Mahlprozess von Zementklinker zu Zement, zugegeben werden.

In einer bevorzugten Ausführungsform erhöht sich das Ausbreitmaß nach 60 Minuten im Standardversuch gegenüber einer hydraulisch abbindenden Zusammensetzung ohne Verflüssiger um mehr als 10%, bevorzugt um mehr als 20%. Gleichzeitig erhöht sich die Abbindezeit bevorzugt um nicht mehr als 30%, noch mehr bevorzugt um nicht mehr als 20%.

Die erfindungsgemäße Verwendung, die Zusammensetzungen und Verfahren lösen die Aufgabe, die der Erfindung zugrunde liegt. Bei der erfindungsgemäßen Verwendung von Cellulosederivaten als Dispergiermittel wird ein vorteilhafter verflüssigender Effekt erzielt, ohne dass die Abbindedauer in unerwünschter Weise zunimmt. Die erfindungsgemäß hergestellten ausgehärteten Baustoffe weisen gleichzeitig gute mechanische Eigenschaften auf. Die Zellulosederivate sind einfach handhabbar und basieren auf nachwachsenden Rohstoffen.

Figur 1 zeigt das ¹³C- NMR Spektrum von Natriumcellulosesulfat CS3 aus Beispiel 3 mit dem Substitutionsmuster C-6 DS: 0.85, C-2 DS: 0.45, C-3 DS: 0.30. Aufgenommen wurde mit 22'000 Scans, in D₂O bei 70°C, 75 MHz.

### Ausführungsbeispiele

### Strukturanalyse von Cellulosederivaten

Der Substitutionsgrad der Cellulose an der C2-, C3- und C6-Position wurde mittels ¹³C-NMR bestimmt. Die Auswertung der NMR-Spektren erfolgte wie in der Literatur bei Zhang et al., 2009 und 2010 beschrieben. Figur 1 zeigt beispielhaft das ¹³C-NMR Spektrum von Natriumcellulosesulfat CS3 aus Beispiel 3.

Die ¹³C-NMR - Analysemethode kann für die Bestimmung der Sulfatverteilungen auf der AGU (Anhydrous Glucose Unit) der Cellulose eingesetzt werden. Alle Kohlenstoffatome der AGU weisen eine andere Signalverschiebung auf. Zusätzlich können Kohlenstoffatome mit und ohne Sulfatgruppen wegen verschiedener Entschirmungen unterschieden werden. Die Sulfatgruppe bewirkt je nach Position eine entsprechende Zu- oder Abnahme der elektronischen Entschirmung. Nicht nur der totale Sulfatierungsgrad, sondern auch partielle Sulfatierungen können an den verschiedenen Positionen ermittelt werden. Das Signal von C-6 (unsubstituiert) wurde bei 63 ppm und das Signal des C-6 Sulfats bei 69 ppm (in Relation zu TMS) gefunden. Bei der Position C-3 ist nur die sulfatierte Position sichtbar, da C-3 sonst durch andere Kohlenstoffatome im Spektrum überlagert wird. C-3 Sulfat wird bei 82 - 85 ppm detektiert. Sulfatierungen an der C-2 Position können auch indirekt durch das Signal von C-1 bestimmt werden. Der C-1 Peak erfährt durch eine Sulfatierung an der C-2 Position eine Hochfeldverschiebung von 105 ppm zu 103 ppm. Der Substitutionsgrad an den einzelnen Positionen konnte durch Integration und Normierung der Peakfläche bestimmt werden. Hierbei wurde die Summe der Integrale von C-6 (unsubstituiert) und von C-6 Sulfat gleich 1 gesetzt und auf diese normiert.

### Beispiel 1: Herstellung von CS1

### Stufe 1: Selektive Deacetylierung von Cellulosetriacetat

15.0 g Cellulosetriacetat (Sigma Aldrich) wurden in 258 ml DMSO bei 110°C langsam gelöst und anschließend auf 45°C abgekühlt. 14.2 g 1,6-Diaminohexan, gelöst in 20 ml Wasser, wurden zugegeben, wobei es zu Inhomogenitäten mit Ausfällungen kam. Die Mischung wurde 24 Stunden bei 70°C gerührt und eine viskose, gelbe klare Lösung erhalten. Nach dem Abkühlen auf ca. 30 °C wurden 400 ml warmes Ethanol (ca. 40 °C) zugegeben und eine gelbe, gelartige Masse ausgefällt, welche abgetrennt und nochmals aus DMSO in Ethanol umgefällt wurde. Nach zweimaligem Waschen mit Ethanol wurde die gelartige Masse im Hochvakuum getrocknet.

### Stufe 2: Sulfatierung und Deacetylierung

Das nach Stufe1 selektiv deacetylierte Celluloseacetat wurde in 2 Tagen bei 70 °C in 400 ml DMF fast vollständig gelöst und mit 57.93 g SO₃·Pyridin während 3 Tagen bei Raumtemperatur und 4 Stunden bei 80 °C sulfatiert. Nach dem Abkühlen wurde in 750 ml Aceton ausgefällt. Nach zweimaligem Waschen mit Aceton wurde der Feststoff in 250 ml H₂O gelöst und der pH mit 12.1 g NaOH in 300 ml H₂O auf 14 gestellt. Die Lösung wurde 2 Stunden auf 50 °C erhitzt und das Produkt nach dem Abkühlen in 1000 ml Ethanol ausgefällt. Der erhaltene farblose Feststoff wurde abgetrennt und in 600 ml H₂O aufgelöst, über einen Faltenfilter filtriert, anschließend über eine 3 KD-Membran ultrafiltriert und anschließend gefriergetrocknet. Es wurden 6.9 g von CS1 erhalten. Die 13C-NMR-Analyse ergab einen gesamt-DS von 1.5 und als Verteilung der Sulfatgruppen C6/C2/C3 = 0.55/0.9/0.05. Die GPC-Messung ergab ein Molekulargewicht Mw von 153'000 g/mol.

### Beispiel 2: Herstellung von CS2

CS2 wurde in gleicher Weise wie CS1 gemäß Beispiel 1 hergestellt, außer dass zur Sulfatierung 13.2 g Amidosulfonsäure anstelle von SO₃·Pyridin verwendet wurden. Es wurden 7.10 g CS2 erhalten.

### Beispiel 3: Herstellung von CS3

15.0 g mikrokristalline Cellulose (Avicel PH101, Fluka) wurden 22 Stunden bei Raumtemperatur in 450 ml DMF suspendiert. 54.3 g Chlorsulfonsäure wurden langsam zu 50 ml DMF (stark exotherme Reaktion) zugegeben und dieses Sulfatierungsgemisch wurde portionsweise der Cellulosesuspension zugegeben. Nach einer halben Stunde wurde eine klare, farblose und homogene Lösung erhalten, welche bei Raumtemperatur 3 Tage lang gerührt wurde. Das Produkt wurde in einem Ethanol/Aceton-Gemisch ausgefällt, abgetrennt und in 1 M wässriger NaOH gelöst. Die Lösung wurde mit NaOH auf pH 11 gestellt und über eine 3 KD-Membran ultrafiltriert und anschließend gefriergetrocknet. Es wurden 10.3 g CS3 erhalten. Die 13C-NMR-Analyse ergab einen gesamt-DS von 1.6 und als Verteilung der Sulfatgruppen C6/C2/C3 = 0.85/0.45/0.30. Die GPC-Messung ergab ein Molekulargewicht Mw von 65'000 g/mol. Figur 1 zeigt das ¹³C-NMR Spektrum von CS3. Aufgenommen wurde mit 22'000 Scans, in D₂O bei 70°C, 75 MHz.

### Beispiel 4: Herstellung von CS4

### Stufe 1: Herstellung von Trimethylsilylcellulose

30.0 g Avicel PH 101 wurden in einem 1000 ml Zweihalskolben mit 500 ml DMAc (N,N-Dimethylacetamid) unter Rühren bei 130 °C gelöst. Ab Erreichen der Temperatur wurde während 30 min ohne Kühlkolonne erhitzt um restliche Feuchtigkeit aus der Cellulose zu entfernen. Nach zusätzlichen 2 Stunden erwärmen mit Kühlkolonne wurde das Gemisch, auf 100 °C abgekühlt und mit 45.0 g LiCl versetzt. Die zuerst milchige Emulsion ging nach mehreren Stunden rühren bei Raumtemperatur in eine klare, hochviskose Lösung über. Nun wurde portionsweise ein Gemisch aus 150.0 g Hexamethyldisilazan und 5.0 g Chlortrimethylsilan zugegeben. Die Suspension wurde während 2 Tagen bei Raumtemperatur und anschließend weitere 4 Tage bei 100 °C gerührt. Der Feststoff wurde abfiltriert und zuerst mit Ethanol, dann mit H₂O gewaschen und im Vakuum getrocknet. Nach dem Trocknen wurden 63.44 g eines zähen und harten Feststoffs erhalten (CS4-1).

### Stufe 2: Sulfatierung und Entfernung der Schutzgruppen

25.0 g Trimethylsilylcellulose (CS4-1) wurden in 460 ml DMF gelöst. Die Lösung wurde auf 5 °C gekühlt. Für die Sulfatierung wurden 15.5 g Chlorsulfonsäure vorsichtig zu 20 ml DMF zugegeben (stark exotherme Reaktion) und das entstandene Sulfatierungsreagenz wurde mittels Tropftrichter langsam in die mit einem Eisbad gekühlte Lösung der Trimethylsilylcellulose eingetropft. Dabei wurde darauf geachtet, dass die Temperatur 10 °C nicht überschritt. Nach der Zugabe wurde das nicht vollständig homogene Gemisch 3 Stunden bei Raumtemperatur gerührt. Das sulfatierte Produkt wurde durch Ausfällung in 900 ml 0.33 M ethanolischer NaOH isoliert. Der abgetrennte Feststoff wurde in 0.1 M wässriger NaOH bei pH 9-10 gelöst. Restliches Ethanol wurde am Rotationsverdampfer entfernt und die Lösung über eine 3 KD-Membran ultrafiltriert. Nach der Gefriertrocknung wurden 8.7 g CS4 erhalten. Die 13C-NMR-Analyse ergab einen gesamt-DS von 1.85 und als Verteilung der Sulfatgruppen
C6/C2/C3 = 1.0/0.5/0.35. Die GPC-Messung ergab ein Molekulargewicht Mw von 187'000 g/mol.

### Beispiel 5: Herstellung von CS5

10.0 g Avicel PH 101 wurden 24 Stunden bei Raumtemperatur in 400 ml DMF suspendiert. Das Sulfatierungsreagens wurde durch langsame Zugabe von 43.2 g Chlorsulfonsäure zu 50 ml DMF (stark exotherme Reaktion) und anschließender Zugabe von 25.2 g Essigsäureanhydrid hergestellt. Dieses Sulfatierungsreagenz wurde portionsweise unter ständigem Rühren in die Cellulosesuspension eingetropft. Die erhaltene klare Lösung wurde 5 Stunden bei 40 °C gerührt. Das Produkt wurde in einer Aceton/Ethanol-Mischung ausgefällt. Der Feststoff wurde abgetrennt und in einer wässrigen NaOH-Lösung gelöst und der pH auf 10 eingestellt. Es wurde mit einer 3 KD-Membran ultrafiltriert und anschließend gefriergetrocknet. Es wurden 9.6 g CS5 erhalten. Die 13C-NMR-Analyse ergab einen gesamt-DS von 0.8 und als Verteilung der Sulfatgruppen C6/C2/C3 = 0.8/0.0/0.0. Die GPC-Messung ergab ein Molekulargewicht Mw von 166'000 g/mol.

### Beispiel 6: Herstellung von CS6

CS6 wurde in gleicher Weise wie CS5 in Beispiel 5 hergestellt, aber anstelle von Avicel PH 101 wurde Cellulosepulver aus Fichtenholz (Fluka) verwendet. Die 13C-NMR-Analyse ergab einen gesamt-DS von 1.8 und als Verteilung der Sulfatgruppen C6/C2/C3 = 1.0/0.6/0.20. Die GPC-Messung ergab ein Molekulargewicht Mw von 62'000 g/mol.

### Beispiel 7: Herstellung von CS7

### Stufe 1: Trifluoroacetylierung der Cellulose zu Cellulosetrifluoracetat CS7-1

111.7 g Trifluoressigsäure und 56.6 g Trifluoressigsäureanhydrid wurden in einem 500 ml Reaktionskolben vorgelegt. Unter permanentem Rühren wurden langsam 7.5 g Avicel PH 101 zugegeben. Nach ca. 3 Stunden Rühren bei Raumtemperatur lag eine klare, braune Lösung vor, die 6 Stunden weitergerührt wurde. Das Zwischenprodukt wurde in 800 ml Diethylether ausgefällt und abfiltriert, nochmals in Diethylether suspendiert, über Nacht gerührt, abfiltriert und im Hochvakuum bei 60 °C getrocknet. Es wurden 12.00 g Cellulosetrifluoracetat erhalten.

### Stufe 2: Sulfatierung und Deacetylierung von Cellulosetrifluoracetat CS7-1 zu CS7

12.0 g Cellulosetrifluoracetat wurden durch mehrstündiges Rühren in 250 ml DMF bei Raumtemperatur unter Inertgasatmosphäre gelöst. Anschließend wurde mit 17.28 g SO₃·Pyridin während einer Stunde unter Eisbadkühlung und weiteren 4 Stunden bei Raumtemperatur sulfatiert. Das Produkt wurde in 800 ml 0.25 M ethanolischer NaOH ausgefällt und anschließend abfiltriert. Der Feststoff wurde in Wasser gelöst, das Restethanol am Rotationsverdampfer entfernt und die Lösung mittels 3 KD Membran ultrafiltriert. Nach der Gefriertrocknung wurden 8.9 g CS7 erhalten. Die 13C-NMR-Analyse ergab einen gesamt-DS von 0.9 und als Verteilung der Sulfatgruppen C6/C2/C3 = 0.0/0.6/0.30. Die GPC-Messung ergab ein Molekulargewicht Mw von 183'000 g/mol.

### Beispiel 8: Herstellung von CS8

### Stufe 1: Tritylierung von Cellulose zu Triphenylmethylcellulose

15.0 g Avicel PH 101 wurden in 260 ml DMAc 30 Minuten bei 130 °C gerührt. Nach Abkühlen auf 100 °C wurden 21.0 g LiCl zugegeben und über Nacht bei Raumtemperatur gerührt. Zu der Lösung wurden 33.6 ml Pyridin zugegeben und anschließend 51.63 g Triphenylmethylchlorid in 70 ml DMAc mittels Tropftrichter während 20 min unter Rühren zugetropft. Die entstandene Suspension wurde 3 Tage bei 70°C gerührt. Die klare Lösung wurde nach Abkühlen auf Raumtemperatur in Ethanol gegossen und das ausgefallene Zwischenprodukt abfiltriert und zweimal mit Ethanol gewaschen. Der Feststoff wurde im Hochvakuum getrocknet. Es wurden 18.3 g Zwischenprodukt isoliert.

### Stufe 2: Sulfatierung von Triphenylmethylcellulose zu Triphenylmethylcellulosesulfat

15.0 g des Zwischenproduktes aus Stufe 1 wurden in 350 ml DMSO gelöst und mit 29.5 g SO₃·Pyridin versetzt. Die Mischung wurde 4.5 Stunden bei Raumtemperatur gerührt. Es wurde in Ethanol gefällt, der Feststoff abfiltriert und zweimal mit Ethanol gewaschen, nochmals in Ethanol suspendiert, über Nacht gerührt und abfiltriert.

### Stufe 3: Detritylierung von Triphenylmethylcellulosesulfat zu Natriumcellulosesulfat CS8

Das Triphenylmethylcellulosesulfat aus Stufe 2 wurde in einem Gemisch von 59.6 g Trifluoressigsäure und 178.7 g Trifluoressigsäureanhydrid suspendiert und 5.5 Stunden unter Inertgasatmosphäre gerührt. Es wurde abdekantiert und der Feststoff mit 1 M wässriger NaOH versetzt. Das wässerige Gemisch wurde filtriert, am Rotationsverdampfer aufkonzentriert, über eine 3 KD-Membran ultrafiltriert und gefriergetrocknet. Es wurden so 2.47 g CS8 erhalten. Die 13C-NMR-Analyse ergab einen gesamt-DS von 0.3 und als Verteilung der Sulfatgruppen C6/C2/C3 = 0.3/0.0/0.0. Die GPC-Messung ergab ein Molekulargewicht Mw von 66'000 g/mol.

### Beispiel 9: Herstellung von CS9 durch regioselektive Desulfatierung

Die Synthese erfolgte analog zum vorstehend erwähnten Beispiel 3. Die in Beispiel 3 beschriebene Sulfatierung wurde dabei mit 1/3 der Ansatzmenge wiederholt, das Produkt aber nach der Sulfatierung nicht ausgefällt, sondern mit 37.7 g N,O-bis(trimethylsilyl)acetamid (BTSA) in 150 ml Pyridin versetzt. Danach wurde 24 h bei 60 °C gerührt. Das Produkt wurde in 600 ml ethanolischer 0.33 M NaOH ausgefällt. Der Feststoff wurde abfiltriert und zweimal mit Ethanol gewaschen. Nach Auflösen in wässriger NaOH und Einstellen des pH auf 10 wurde über eine 3 KD-Membran ultrafiltriert. Nach dem Gefriertrocknen wurden 5.22 g CS9 erhalten. Die 13C-NMR-Analyse ergab einen gesamt-DS von 0.6 und als Verteilung der Sulfatgruppen C6/C2/C3 = 0.6/0.0/0.0. Die GPC-Messung ergab ein Molekulargewicht Mw von 160'000 g/mol.

### Beispiel 10: Herstellung von CS10 durch regioselektive Desulfatierung:

Die in Beispiel 5 beschriebene Sulfatierung wurde mit der halben Ansatzmenge wiederholt, das Produkt aber nach der Sulfatierung nicht ausgefällt, sondern in gleicher Weise wie in Beispiel 9 beschrieben desulfatiert und gereinigt. Nach dem Gefriertrocknen wurden 1.3 g CS10 erhalten. Die 13C-NMR-Analyse ergab einen gesamt-DS von 0.4 und als Verteilung der Sulfatgruppen C6/C2/C3 = 0.4/0.0/0.0. Die GPC-Messung ergab ein Molekulargewicht Mw von 55'000 g/mol.

### Beispiel 11: Zementtest 1

Für die Beispiele 11 bis 12 wurde der nachfolgend beschriebene Verflüssigertest eingesetzt.

Die entsprechende Menge Probesubstanz wird im Anmachwasser, in einem 250 ml Mischgefäß eingewogen und gelöst. Dann werden jeweils 250 g einer Mischung aus 3 Schweizer CEM I 42.5 Zementen (1:1:1 in Gewichtsteilen) unter langsamen Rühren mit einen Propellerrührer (Durchmesser 20 mm) eingestreut. Die Rührgeschwindigkeit wird auf 2000 U/min erhöht und der Zementleim insgesamt 2 Minuten gut durchgemischt. Ein offener Messzylinder (50 mm Durchmesser, 51 mm Höhe), der auf einer sauberen Glasplatte mit 30 cm Durchmesser steht, wird mit dem Zementleim plan aufgefüllt. Der Messzylinder wird hochgehoben, sodass der Zementleim ausfließen kann. Der Durchmesser des gebildeten Zementleim-Kuchens wird auf 1 mm genau abgemessen und als Ausbreitmass notiert. Der Zementleim wird nach der Messung wieder in das Mischgefäß gefüllt und die Messung nach 30 bzw. 60 Minuten ab Zugabe des Anmachwassers wiederholt, wobei davor der Zementleim nochmals 15 Sekunden durchgemischt wird, und als Ausbreitmass nach 30 Minuten. bzw. 60 Minuten notiert. Am Ende der Messungen wird der Zementleim in einen Becher mit ca. 250 ml Füllvolumen eingefüllt, in einen Isolationsbehälter gestellt und der Temperaturverlauf der Probe mit einem Pt-100 Fühler und einem Datenlogger verfolgt. Die Zeit von der Zugabe des Anmachwassers bis zur Erreichung des Temperaturmaximums wird als Abbindezeit ausgewertet.

Für Beispiel 11 wurden folgende spezielle Bedingungen ausgewählt: Wasserzementwert (^{w}/_{z})= 0.4, Dosierung Verflüssiger 0.3% Feststoff auf Gewicht von Zement. Die Ergebnisse sind in Tabelle 1 zusammengefasst. Ein Vergleichsversuch wurde mit einem kommerziell erhältlichen Lignosulfonat der Marke Borresperse CA-SA und mit einem kommerziell erhältlichen Naphthalinsulfonsäure-Formaldehyd Kondensat (NSFK) durchgeführt.

**Tabelle 1:**

| **Probe** | **Dosis [%]** | **Ausbreitmass [mm]** | | | **Abbindezeit [h]** |
|---|---|---|---|---|---|
| | | **2'** | **30'** | **60'** | |
| ohne Verflüssiger | 0.0 | 154 | 143 | 142 | nicht gemessen |
| CS1 | 0.3 | 195 | 193 | 186 | 6.5 |
| CS3 | 0.3 | 187 | 177 | 175 | 7.5 |
| CS4 | 0.3 | 178 | 173 | 166 | 6.1 |
| CS5 (Vergleich) | 0.3 | 155 | 154 | 144 | 18.0 |
| CS7 | 0.3 | 205 | 201 | 198 | 6.3 |
| CS8 (Vergleich) | 0.3 | 182 | 181 | 176 | 25.4 |
| CS9 (Vergleich) | 0.3 | 176 | 166 | 156 | 31.5 |
| CS10 (Vergleich) | 0.3 | 201 | 197 | 190 | 28.1 |
| NSFK (Vergleich) | 0.3 | 208 | 189 | 184 | 5.0 |
| Lignosulfonat (Vergleich) | 0.3 | 158 | 148 | 145 | 6.5 |

Der Zementtest 1 zeigt die gute Verflüssigungswirkung der Cellulosesulfate im Vergleich zum Lignosulfonat und ohne Verflüssiger. Es wird teilweise sogar eine vergleichbare Verflüssigung wie die des NSFK-Vergleichsverflüssigers erreicht. Die Cellulosesulfate CS5, CS8, CS9 und CS10 (Vergleichsbeispiele) bewirken jeweils eine deutliche Verzögerung des Abbindens. Diese Cellulosesulfate sind ausschließlich an der C6-Position sulfatiert. Die Cellulosesulfate CS1, CS3, CS4 und CS7 zeigen hingegen deutlich kürzere Abbindezeiten und verzögern nicht stärker als das Lignosulfonat. Diese Cellulosesulfate haben an C2 einen Substitutionsgrad (DS) von 0.45 bis 0.90 und einen DS von C2+C3 von größer gleich 0.75. Es fällt auch auf, dass bei CS1, CS3, CS4 und CS5 die Verflüssigung schlechter wird, je höher der DS an C6 ist.

### Beispiel 12: Zementtest 2

Bedingungen: ^{w}/_{z} = 0.4, Dosierung Verflüssiger 0.3% Feststoff auf Gewicht von Zement. Es wurden Vergleichsversuche durchgeführt wie oben für Zementtest 1 beschrieben. Die Ergebnisse sind in Tabelle 2 zusammengefasst.

**Tabelle 2:**

| **Probe** | **Dosis [%]** | **Ausbreitmass [mm]** | | | **Abbindezeit [h]** |
|---|---|---|---|---|---|
| | | **2'** | **30'** | **60'** | |
| ohne Verflüssiger | 0.0 | 164 | 158 | 144 | 11.0 |
| Lignosulfonat (Vergleich) | 0.3 | 172 | 168 | 165 | 13.8 |
| CS2 | 0.3 | 186 | 168 | 164 | 14.0 |
| CS3 | 0.3 | 176 | 169 | 167 | 15.0 |
| CS5 (Vergleich) | 0.3 | 167 | 157 | 154 | 31.1 |
| CS6 | 0.3 | 170 | 166 | 164 | 13.0 |
| CS7 | 0.3 | 197 | 181 | 179 | 12.8 |
| NSFK (Vergleich) | 0.3 | 201 | 196 | 172 | 11.0 |

Zementtest 2 zeigt, dass die Sulfatierung an der C6-Position für die Verflüssigung nicht unbedingt von Vorteil ist. CS6 und CS7 haben vergleichbare Substitution an C2 und C3, CS6 ist jedoch an C6 vollständig substituiert, CS7 hingegen ist nicht an C6 substituiert. CS6 verflüssigt deutlich schlechter als CS7.

Tabelle 3 zeigt die Substitutionsmuster der eingesetzten Cellulosederivate und eine vereinfachte Zusammenstellung der Messresultate aus Zementtest 1. CS5, CS8, CS9 und CS10 sind Vergleichsbeispiele. Nur die erfindungsgemäßen Derivate, die an der C2-Postion substituiert sind, zeigen eine vorteilhafte Kombination von guter Verflüssigerwirkung und kurzer Abbindezeit.

**Tabelle 3:**

| **Prod.** | **GPC** | **¹³C-NMR** | | | | **Zementtests** | | **Rohstoff** |
|---|---|---|---|---|---|---|---|---|
| | M_{w} | DSₛ C-6 | DSₛ C-2 | DSₛ C-3 | DS total | Verflüssigung | Abbinde-zeit | |
| ***CS1*** | 152'000 | 0.55 | 0.90 | 0.05 | 1.50 | **+++** | **0** | Avicel |
| ***CS3*** | 65'000 | 0.85 | 0.45 | 0.30 | 1.60 | **++** | **0** | Avicel |
| ***CS4*** | 187'000 | 1.00 | 0.50 | 0.35 | 1.85 | **+** | **0** | Avicel |
| ***CS5*** | 166'000 | 0.80 | 0.00 | 0.00 | 0.80 | **0** | **- - -** | Avicel |
| **CS7** | 183'000 | 0.00 | 0.60 | 0.30 | 0.90 | **++** | **0** | Avicel |
| **CS8** | 66'000 | 0.30 | 0.00 | 0.00 | 0.30 | **++** | **- - -** | Avicel |
| **CS9** | 160'000 | 0.60 | 0.00 | 0.00 | 0.60 | **+** | **- - -** | Avicel |
| **CS10** | 55'000 | 0.40 | 0.00 | 0.00 | 0.40 | **+++** | **- - -** | Avicel |

### Beurteilung der Verflüssigung

Differenz in mm Ausbreitmass der Probe mit Cellulosederivat zur Probe ohne Verflüssiger: 0 bis 9 mm: 0 / 10 bis 24 mm: + / 25 bis 39 mm: ++ / >40 mm: +++

### Beurteilung der Abbindezeit

Differenz der Abbindezeit in Stunden der Probe mit Cellulosederivat zur Probe mit Lignosulfonat:
<1.5 Stunden: 0 / > 10 Stunden: ---

### Beispiel 13: Mörteltest 1

Die besten Cellulosesulfate aus den Zementtests, die nicht zu stark verzögerten, wurden im Mörtel getestet.

| Zusammensetzung der Mörtelmischung: | Menge |
|---|---|
| Zement (Mischung aus 3 Schweizer CEM I 42.5 Zementen 1:1:1 in Gewichtsteilen) | 750 g |
| Kalksteinfiller | 141 g |
| Sand 0-1 mm | 738 g |
| Sand 1-4 mm | 1107 g |
| Sand 4-8 mm | 1154 g |

In einem Hobart-Mischer wurden Zement, Filler und Sand 1 min. trocken gemischt. Das Anmachwasser, in dem die entsprechende Menge Probesubstanz gelöst worden war, wurde zugegeben und der Mörtel 4 min gemischt.

Das Ausbreitmass wurde gemäss EN 1015-3 bestimmt.

Die Abbindezeit-Messung wurde wie im Zementtest beschrieben durchgeführt. Der Luftgehalt wurde gemäss EN 1015-7 gemessen.

Die Mörtelprismen wurden bei 20°C und 95% r.H. gelagert und die Druckfestigkeit gemäss EN 196-1 gemessen.

Bedingungen: ^{w}/_{z} = 0.47, Labortemperatur 20.4 °C, Dosierung Zusatzmittel 0.3% Feststoff auf Zement. Die Druckfestigkeiten nach einem und nach 7 Tagen wurden ermittelt. Es wurden Vergleichsversuche wie oben für die Zementtests beschrieben durchgeführt. Außerdem wurde in einem weiteren Vergleichsversuch Ligninsulfonat N9 (erhältlich bei Avebene Aquitaine) eingesetzt. Die Ergebnisse sind in Tabelle 4 zusammengefasst.

**Tabelle 4:**

| **Probe** | **Luftgehalt** | **Ausbreitmass nach min in mm** | | | | **Abbinde-Zeit** | **Druckfestigkeit in N/mm²** | |
|---|---|---|---|---|---|---|---|---|
| | **[%]** | **5'** | **30'** | **40'** | **60'** | **[h]** | **24 h** | **7d** |
| Borresperse (Lignosulfonat) | 4.0 | 160 | 138 | 128 | s | 16.0 | 20.5 | 43.5 |
| Ligninsulfonat N9 | 3.9 | 174 | 140 | 128 | s | 15.3 | 20.0 | 38.1 |
| CS1 | 3.0 | 154 | 148 | 145 | 143 | 15.0 | 20.3 | 43.2 |
| CS3 | 3.2 | 145 | 149 | 139 | 138 | 16.5 | 17.8 | 40.1 |
| CS4 | 3.0 | 136 | 142 | 138 | 136 | 16.7 | 15.9 | 39.4 |
| CS5 (Vergleich) | 3.0 | 137 | 132 | 129 | s | 20.7 | 10.1 | 34.0 |
| CS7 | 3.2 | 135 | 140 | 136 | 131 | 14.7 | 18.6 | 42.1 |
| NSFK | 3.1 | 175 | 155 | 140 | 133 | 13.0 | 17.1 | 33.2 |

| | | | | | | | | |
|---|---|---|---|---|---|---|---|---|
| s: Mischung war zu steif für die Messung | | | | | | | | |

In dieser Serie waren die Cellulosesulfate in der Anfangsverflüssigung nicht so gut wie die Vergleichs-Lignosulfonate. Allerdings steiften die Mörtel mit den Lignosulfonaten rasch an, sodass bereits nach 30 Minuten das Ausbreitmass der Mörtel mit den Cellulosesulfaten deutlich besser war und auch bis 60 Minuten anhielt. Die stärkste Verzögerung zeigte CS5, was wegen der fehlenden Substitution an C2 zu erwarten war. Die Verzögerung der anderen Cellulosesulfate lag im Bereich der Lignosulfonate.

### Beispiel 14: Mörteltest 2

In einer weiteren Testserie, die wie in Beispiel 13 beschrieben, durchgeführt wurde, wurde die Wirkung von CS2 im Mörtel getestet. Anstelle von reinem Portlandzement wurde hier eine Abmischung mit Flugasche verwendet und die Wirkung der Verflüssiger bei reduziertem Wassergehalt im Vergleich zur Messung ohne Verflüssiger getestet.

Bedingungen: ^{w}/_{z} = 0.560 für die Messung ohne Verflüssiger und ^{w}/_{z} = 0.504 (= 10% Wasserreduktion) für die Messungen mit Verflüssgier, Labortemperatur 20.0 °C, Sand 0-8 mm. Bindemittel 85 % Mischung von 3 CEM I 42.5 und 15% Flugasche (latent hydraulisches Bindemittel der Marke "Saffament"). Es wurden Vergleichsversuche mit verschiedenen Lignosulfaten und dem NSFK-Polymer durchgeführt. Die Ergebnisse sind in Tabelle 6 zusammengefasst.

**Tabelle 6:**

| | **W/Z** | **Dosierung** | **Luft-gehalt** | **Ausbreitmass nach min in mm** | | | | **Abbinde-Ende** | **Druckfestigkeit (N/mm²)** | |
|---|---|---|---|---|---|---|---|---|---|---|
| | | **[%]** | **[%]** | **5'** | **30'** | **60'** | **90'** | **[h]** | **24 h** | **7d** |
| ohne Verflüssiger | 0.560 | 0.00 | 1.6 | 188 | 180 | 166 | 159 | 9.3 | 10.2 | 31.1 |
| Borresperse (Lignosulfonat) | 0.504 | 0.30 | 1.9 | 213 | 162 | 160 | 149 | 25.8 | 6.1 | 33.9 |
| Ligninsulfonat N9 | 0.504 | 0.30 | 2.6 | 214 | 166 | 155 | 145 | 25.3 | 8.0 | 32.2 |
| CS2 | 0.504 | 0.30 | 1.8 | 202 | 191 | 169 | | 16.5 | 10.9 | 39.9 |
| CS2 | 0.504 | 0.35 | 1.6 | 209 | 208 | 190 | 167 | 21.5 | 9.7 | 35.6 |
| NSFK | 0.504 | 0.30 | 1.9 | 215 | 187 | 156 | 142 | 10.2 | 10.6 | 34.2 |

Die Mörteltests zeigen, dass sich die Cellulosesulfate auch gut als Verflüssiger in Mörteln mit Zement/Flugasche Mischungen eignen. Hier wurde die Verflüssigung bei 10% Wasserreduktion gegenüber der Mischung ohne Verflüssiger gemessen. Die Lignosulfonate verzögern das Abbinden der langsam abbindenden Zement-Flugasche-Mischung sehr stark, was bei CS2 deutlich weniger der Fall war. Eine leichte Erhöhung der Dosierung von CS2 von 0.30 auf 0.35%, bezogen auf Zement, bewirkte eine ähnliche Verflüssigung wie ein NSFK-Polymer bei deutlich länger anhaltender Verflüssigung. Überraschend sind auch die deutlich besseren 7-Tage-Festigkeiten von CS2 gegenüber den Vergleichsverflüssigern.

## Patentansprüche

1. Verwendung mindestens eines Cellulosederivats als Dispergiermittel für eine hydraulisch abbindende Zusammensetzung, wobei das Cellulosederivat an der C2-Position einen Substitutionsgrad von mehr als 0.25 aufweist.

2. Verwendung gemäß Anspruch 1, wobei das Cellulosederivat an der C2-Position einen Substitutionsgrad von mehr als 0.4 oder mehr als 0.5 aufweist.

3. Verwendung gemäß mindestens einem der vorhergehenden Ansprüche, wobei das Cellulosederivat ein Celluloseester und/oder Celluloseether ist.

4. Verwendung gemäß mindestens einem der vorhergehenden Ansprüche, wobei das Cellulosederivat an der C2-Position einen Rest aufweist, der ausgewählt ist aus Sulfat, Sulfonat, Alkylsulfat, Alkylsulfonat, Hydroxyalkylsulfat, Hydroxyalkylsulfonat, Alkyl, Hydroxyalkyl und/oder Acetat.

5. Verwendung gemäß mindestens einem der vorhergehenden Ansprüche, wobei das Cellulosederivat an der C2-Position einen anionischen Rest aufweist.

6. Verwendung gemäß mindestens einem der vorhergehenden Ansprüche, wobei das Cellulosederivat an der C3-Position einen Substitutionsgrad von 0 bis 0.5 aufweist.

7. Verwendung gemäß mindestens einem der vorhergehenden Ansprüche, wobei das Cellulosederivat an der C3-Position einen nicht ionischen Rest aufweist.

8. Verwendung gemäß mindestens einem der vorhergehenden Ansprüche, wobei die Summe der Substitutionsgrade des Cellulosederivats an der C2- und C3-Position >0.5, bevorzugt >0.7 ist, und/oder das Cellulosederivat an der C6-Position einen Substitutionsgrad von <0.9, bevorzugt <0.7 aufweist.

9. Verwendung gemäß mindestens einem der vorhergehenden Ansprüche, wobei die hydraulisch abbindende Zusammensetzung ein hydraulisch abbindendes Bindemittel enthält, ausgewählt aus der Gruppe bestehend aus Zement, Gips, gebranntem Kalk, Puzzolan, Schlacke, Hüttensand, Silicastaub, Trass und Flugasche.

10. Verwendung gemäß mindestens einem der vorhergehenden Ansprüche zur Verbesserung der Fliessfähigkeit einer hydraulisch abbindenden Zusammensetzung.

11. Hydraulisch abbindende Zusammensetzung, enthaltend
(a) mindestens ein hydraulisch abbindendes Bindemittel,
(b) mindestens ein Cellulosederivat, das an der C2-Position einen Substitutionsgrad von mehr als 0.25 aufweist, und
(c) gegebenenfalls Wasser.

12. Hydraulisch abbindende Zusammensetzung gemäß Anspruch 11, zusätzlich enthaltend
(d) Zusatzstoffe und/oder Zusatzmittel.

13. Formkörper, erhältlich durch Abbinden und Aushärten einer hydraulisch abbindenden Zusammensetzung gemäß Anspruch 11 oder 12.

14. Verfahren zur Herstellung einer hydraulisch abbindenden Zusammensetzung, umfassend die Schritte
(A)Bereitstellen mindestens eines hydraulisch abbindenden Bindemittels und mindestens eines Cellulosederivats, das an der C2-Position einen Substitutionsgrad von mehr als 0.25 aufweist,
(B) Vermischen des mindestens einen hydraulisch abbindenden Bindemittels und des mindestens einen Cellulosederivats.

15. Dispergiermittel, enthaltend mindestens ein Cellulosederivat, das an der C2-Position einen Substitutionsgrad von mehr als 0.25 aufweist.
